**Europäisches Patentamt**

**European Patent Office**

**Office européen des brevets**

(19)

(11) Publication number: **0 174 325**
**B1**

(12) # EUROPEAN PATENT SPECIFICATION

(45) Date of publication of patent specification: **03.05.89**

(51) Int. Cl.⁴: **F 16 B 7/14,** F 16 B 21/20, A 47 C 3/28

(21) Application number: **85900987.0**

(22) Date of filing: **21.02.85**

(86) International application number:
**PCT/DK85/00010**

(87) International publication number:
**WO 85/03746 29.08.85 Gazette 85/19**

(54) LOCKING RING.

(30) Priority: **23.02.84 DK 904/84**

(43) Date of publication of application:
**19.03.86 Bulletin 86/12**

(45) Publication of the grant of the patent:
**03.05.89 Bulletin 89/18**

(84) Designated Contracting States:
**AT BE CH DE FR GB LI LU NL SE**

(56) References cited:
**DE-A-2 318 796**
**DK-C- 75 447**
**GB-A- 610 674**
**SE-C- 86 246**
**SE-C- 126 404**
**SE-C- 140 643**
**SE-C- 152 278**
**US-A-4 169 687**

(73) Proprietor: **WASSMANN, Mogens**
**Enghave 17**
**DK-2960 Rungsted Kyst (DK)**

(72) Inventor: **LUNDQVIST, Keld**
**L.F. Cortzensvej 31**
**DK-2830 Virum (DK)**

(74) Representative: **Wiklund, Erik et al**
**AWAPATENT AB Box 7402**
**S-103 91 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 174 325 B1

## Description

The invention relates to a locking device comprising a locking ring which fits around and slides on a cylindrical rod or tube and which by the tilting thereof on an axis perpendicular to the axis of the rod can be locked onto the rod.

By the known structures of this kind there will occur by the tilting of the ring points of engagement, curves of engagement or surfaces which lie at some distance from the tilting axis. In order to obtain secure engagement it is therefore necessary to yield a relatively great tilting moment on the ring since the required moment will be directly proportional to the moment arm being the distance between the tilting axis and the point of engagement or the surface of engagement.

The specification to Swedish patent no. 126,404 (& US—A—2,432,245) describes a structure which is slightly similar to the present one but the points of engagement do not lie in the tilting axis and it is therefore not possible to obtain a force of engagement which is as great as by the present invention.

The invention is based on the insight that it is possible to obtain better engagement if it is possible to reduce the mentioned moment arm.

The locking device according to the present invention is characterised in that the areas of the inside of the ring that are most moved by the tilting are designed with faces of such shape that they will never touch the rod before the tilting has been stopped by a squeezing in areas that are close to the tilting axis, i.e. the ring is designed in such a way that the squeezing will take place in areas around the tilting axis.

The above structures relate to two cylinders, whereof one is arranged within the other, which are tilted relatively to each other. By the present invention all sections of the outer cylinder which do not lie close to the tilting axis have been removed. Thereby it is ensured that engagement will only occur in areas situated more or less where the axis of tilting intersects the ring whereby the moment arm becomes very small.

By a further improvement of the present invention the locking ring is adapted to be locked by a pressure spring. There is thus obtained in a manner known per se a permanent locking which may be terminated by a counterpressure.

Yet a further improvement is characterized in that the ring as well as the rod or tube are made of tempered steel. It has turned out that the force of engagement obtained by the locking device according to the present invention is so great that there will easily occur pressure marks in the rod or tube and that it is therefore advantageous to have them tempered.

The locking device according to the invention may advantageously be used for vertical adjustment of chairs.

The invention will be further described in the following with reference to the drawing wherein:
Fig. 1 is a section through a chair where the locking device according to the invention is used as a device for adjusting seat height.

Fig. 2 is a section through a ring which is used in a locking device according to the invention seen in the direction of the arrows along line II—II in Fig. 3, and

Fig. 3 is a top view of the ring shown in Fig. 2.

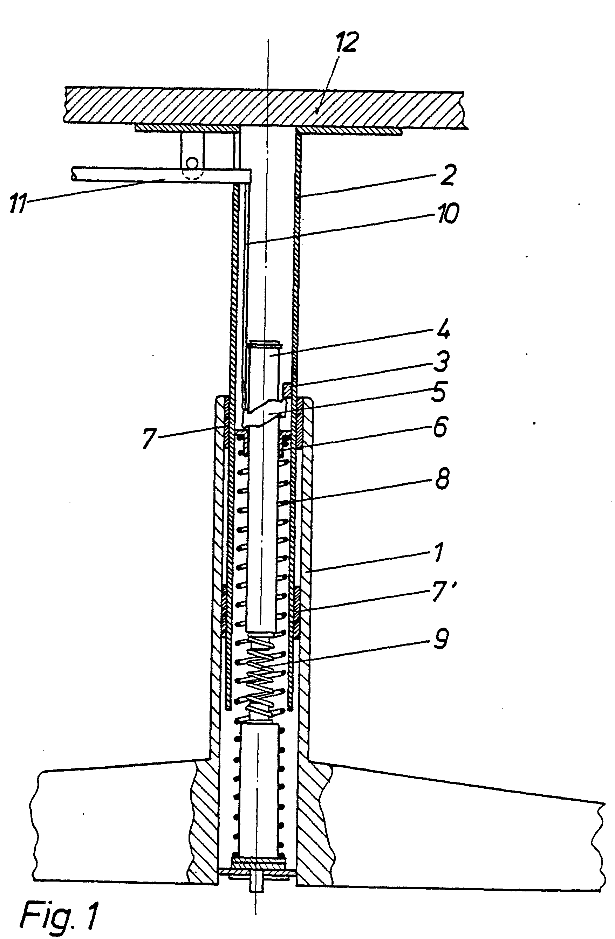

In Fig. 1 there is shown a swivel chair using in its adjustment arrangement a locking device according to the invention. This is by no means to be construed as if the invention is limited to use in connection with chairs but exclusively as an example.

The chair consists of a frame 1 having an upwarldy protruding open tube. By means of linings 7, 7' a seat tube 2 supporting seat 12 of the chair is telescopically arranged in the frame tube 1. Resting on a spring 9 there is placed a tube 4 inside the chair. The spring 9 increases user comfort since it will serve to spring seat 12. Spring 9 moreover protects the device against hard loads for by the locking of the ring it will take up a great part of the load. This will reduce wear of the locking ring.

The tube 4 is surrounded by a sleeve 6 slideable thereon and which is connected with an adjusting spring 8 which is secured by the bottom of the frame. Seat tube 2 moreover has a stop 3.

Between stop 3 and sleeve 6 there is surrounding tube 4 arranged a ring 5 forming together with tube 4 a locking device according to the invention.

Opposite stop 3 the ring 5 is connected with a release mechanism 10 which can be actuated by a handle 11.

The mode of operation of the chair is as follows: When release mechanism 10 is not actuated, sleeve 6 will be pressed up by the action of spring 8 and by this action and the action of stp 3 tilt the ring which will squeeze onto tube 4. The seat 23 is now locked but will nevertheless be sprung by spring 9.

In order to lift or lower seat 12 if so desired release mecahnism 10 is actuated by handle 11. This will cause one side of ring 5 to be pressed down against the elastic force of spring 8 so that the ring is no longer tilted.

If the pressure on the seat is now relieved, spring 8 will press collar 6, ring 5 and stop 3 in an upwards direction. Seat 12 will thus be lifted which will be the case until handle 11 is again released when ring 5 will at once tilt.

The same is the case if the seat height is to be lowered. It will then be necessary to load the seat further in such a manner that spring 8 is comnpressed. This spring should moreover have a lifting power of approx. 440N (45 kilos) giving a swivel chair which can be used by almost all people with a good result.

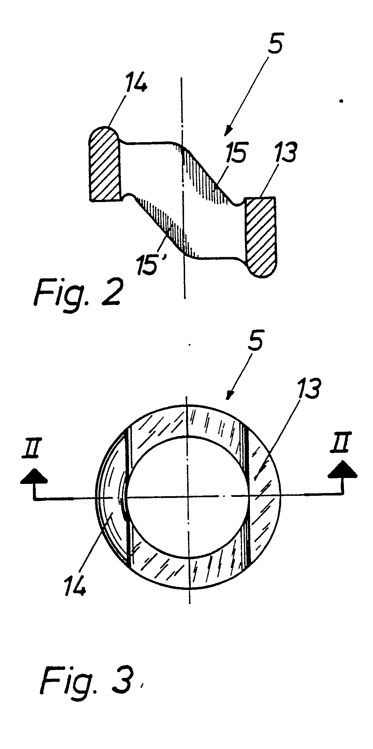

Figs. 2 and 3 show a ring according to the invention in greater detail. Ring 5 is on its upper side provided with a horizontal face 13 serving as a contact face for the release mechanism. Diametrically opposite said face there is a curved face 14 for contact against the underside of the stop 3.

Hatchings 15, 15' inside ring 5 suggest where the ring squeezes around the rod. Of course there are two similar areas opposite the two areas shown.

The locking ring of the locking device according to the invention is advantageously made of metal and particularly of tempered steel. However, the use of other softer materials may come into question if conditions speak therefor for example in case of poor loads.

The shown embodiment has proved to function excellently in a swivel chair. It is, however, within the scope of the invention to design particularly the ring in many different ways according to its intended use. It is merely important that a sufficient amount of material is cut away in relation to the clearance between ring and rod so that the desired squeezing effect is obtained. This means that so much material will have to be cut away that the ring will squeeze onto the tube before any other part of the ring comes into contact with the tube.

In many cases it will be more advantageous to use a tube rather than a rod because the tube may be slightly springy and this will reduce wear. Furthermore, the spring effect will help to re-release the connection. It is obvious that great deformations of tempered steel tubes will not occur but even a deformation of a few hundredth of a millimeter may be of importance.

### Claims

1. A locking device comprising a locking ring (5) which fits around and slides on a cylindrical rod (4) or tube and which by the tilting thereof on an axis perpendicular to the axis of the rod (4) can be locked onto the rod (4), characterised in that the areas of the inside of the ring (5) that are most moved by the tilting are designed with faces of such shape that they will never touch the rod (4) before the tilting has been stopped by a squeezing in areas (15, 15') that are close to the tilting axis, i.e. the ring is designed in such a way that the squeezing will take place in areas around the tilting axis.

2. A locking device according to claim 1, characterised in, that the locking ring is adapted to be locked by a pressure spring (8).

3. A locking device according to claim 1 or 2, characterised in, that the locking ring (5) as well as the rod or tube (4) are made of tempered steel.

4. Use of the device according to claim 1—3 as a device for vertical adjustment of a chair or the like.

### Patentansprüche

1. Klemmvorrichtung mit einem Klemmring (5), der einen zylindrischen Stab (4) oder Rohr umgibt und dar auf gleitet und der durch Kippen um eine zur Achse des Stabes (4) senkrechte Achse an dem Stab (4) verklemmt werden kann, dadurch gekennzeichnet, daß die Bereiche der Innenseite des Rings (5), die am meisten durch das Verschwenken bewegt werden, mit Flächen solcher Gestalt versehen sind, daß sie niemals den Stab (4) berühren, bevor das Verschwenken durch ein Festklemmen in Bereichen (15, 15') beendet worden ist, die nahe der Schwenkachse liegen, d.h. der Ring ist derart gestaltet, daß das Klemmen in Bereichen um die Schwenkachse stattfindet.

2. Klemmvorrichtung nach Anspruch 1, dadurch gekennzeichnet, daß der Klemmring dazu eingerichtet ist, von einer Druckfeder (8) festgeklemmt zu werden.

3. Klemmvorrichtung nach Anspruch 1 oder 2, dadurch gekennzeichnet, daß der Klemmring (5) sowie der Stab oder das Rohr (4) aus angelassenem Stahl bestehen.

4. Verwendung der Vorrichtung nach den Ansprüchen 1 bis 3 als eine Vorrichtung zur Vertikaleinstellung eines Stuhls oder dergleichen.

### Revendications

1. Dispositif de blocage comprenant une bague (5) de blocage qui s'adjuste autour d'une tige ou d'un tube cylindrique (4) et qui coulisse sur cette tige ou ce tube cylindrique et qui, par son inclinaison sur un axe perpendiculaire à l'axe de la tige (4), peut être bloquée sur la tige (4), caractérisé en ce que les zones de l'intérieur de la bague (5) qui sont le plus déplacées par l'inclinaison sont conçues de façon à présenter des faces d'une forme telle qu'elles ne touchent jamais la tige (4) avant que l'inclinaison ait été arrêtée par un serrage dans les zones (15, 15') qui sont proches de l'axe d'inclinaison, c'est-à-dire que la bague est conçue de manière que le serrage ait lieu dans des zones situées autour de l'axe d'inclinaison.

2. Dispositif de blocage selon la revendication 1, caractérisé en ce que la bague de blocage est conçue pour être bloquée par un ressort (8) de compression.

3. Dispositif de blocage selon la revendication 1 ou 2, caractérisé en ce que la bague (5) de blocage ainsi que la tige ou le tube (4) sont réalisés en acier trempé.

4. Utilisation du dispositif selon les revendications 1—3 comme dispositif pour régler verticalement un siège ou analogue.

*Fig. 1*

Fig. 2

Fig. 3